# EUROPEAN PATENT SPECIFICATION

(11) **EP 1 851 946 B1**
(45) Date of publication and mention of the grant of the patent: **11.11.2009**
(21) Application number: 06708016.8
(22) Date of filing: 03.02.2006
(51) Int. Cl.: H04M 15/00, H04M 17/00, H04M 3/46

(54) **SYSTEM AND APPARATUS FOR PROCESSING NETWORK EVENTS**
SYSTEM UND VORRICHTUG ZUM VERARBEITEN VON NETZWERKEREIGNISSEN
SYSTEME ET DISPOSITIF DE TRAITEMENT D'EVENEMENTS DE RESEAU

(30) Priority: 04.02.2005 GB 0502353
(43) Date of publication of application: 07.11.2007
(73) Proprietor: Orange SA, London W1U 7DZ (GB)
(72) Inventor: TUTCHER, Benomy, London Greater London WIU 7DZ (GB); PARSONS, Julian, London Greater London W1U 7DZ (GB)
(74) Representative: Thiel, Frédéric
(86) International application number: PCT/EP2006/050667
(87) International publication number: WO 2006/082243

(56) References cited:
- WO-A-03/025809
- WO-A-03/034631
- WO-A-03/069434
- WO-A-03/073693
- US-B1- 6 760 418
- "Digital cellular telecommunications system (Phase 2+); Universal Mobile Telecommunications System (UMTS); Telecommunication management; Charging management; Online Charging System (OCS): Applications and interfaces (3GPP TS 32.296 version 6.0.0 Release 6); ETSI TS 132 296" ETSI STANDARDS, EUROPEAN TELECOMMUNICATIONS STANDARDS INSTITUTE, SOPHIA-ANTIPO, FR, vol. 3-SA5, no. V600, December 2004 (2004-12), XP014028039 ISSN: 0000-0001

## Description

### Field of the Invention

The present invention relates to a method and a system for processing events in a communications network, and is particularly, but not exclusively, suited to rating usage of network resources associated with the events. Embodiments of the invention are particularly well suited for use in rating a service that involves the operation of a plurality of service nodes, each of which is arranged to provide a particular network service in a mobile network, or a fixed network, or a combination of the two.

### Background of the Invention

Users of communications services, in particular of mobile telecommunications services, typically fall into one of two categories: post-pay (or contract) customers, and pre-pay customers. Traditionally, post-pay users are referred to as subscribers and usage of network resources is rated and charged after provision thereof by means of Call Detail Records (CDR), which contain information setting out the particulars of the usage. Both types of users can subscribe to services provided by Intelligent Network (IN) service nodes, but the nodes that provide post-pay customers with service generate different call set-up messages to those that are used to provide pre-pay customers with service. More specifically, post-pay services generate FurnishChargingInformation (FCI) and SendChargingInformation (SCI) messages that are used to modify CDR generation, whereas pre-pay services generate Apply Charging (AC) and Apply Charging Report (ACR) messages, which, in real time, facilitate charging of network usage.

With the ever increasing range of services, tariffs, and bundle options, there is a need for billing to become more flexible, generally, and for real time billing to be effected in respect of post-pay subscribers. One possible approach is to process usage of network resources by post-pay subscribers with the infrastructure used in relation to pre-pay users, but the logistics associated with porting the subscribers are non-trivial, and, in any event, pre-pay systems tend to be monolithic, managing both the IN call control and accounting, which is rather inflexible.

International patent application having publication number WO03/073693 describes an arrangement for rating network services in which the network operator runs a centralized rating and charging engine and each service provider runs their own charging function. A given charging function is associated with whichever network services are provided to the operator by the associated service provider, and the central rating engine of the network operator sends requests, to these charging functions, for a given service to be rated. A problem with the arrangement described in WO03/073693 is that each service is rated in isolation, and, since there is no means for the event to be rated so as to account for a plurality of services associated with a given network event, WO03/073693 is limited in its applicability in relation to network events involving more than one such service.

International patent application having publication number WO03/025809 describes an arrangement which takes two models - real-time and offline Call Detail Record (CDR) charging - and creates a single node that can process both real-time and offline charging. It describes a cumulative operation that takes two previously separate APIs and combines them to provide a single API that is the sum of both so as to offer both functions in a single node; thus it provides a proxy for both options so that a single node can be addressed, but once the appropriate half API has been selected, the selected half is used. In WO03/025809, each of the service nodes communicates directly with a charging/credit node as per conventional methods, so that rating and billing of a call is handled on a per-service basis.

International patent application having publication number WO03/034631 describes using Call Detail Records (CDRs) for session based charging or events for single shot (e.g. Short Message Service messages etc) charging. WO03/034631 provides a means of "gluing" various call records generated during the call into a correlated input at a single interface, rather than arranging for the billing engine to perform this function. WO03/034631 specifically refers for CDRs through out, and defines a CDR as including information such as start time and duration of call; thus, by definition, the call detail records are created after the call.

United States Patent having publication number US 6,760,418 B1 discloses a system for providing pre-pay and post-pay calls by extending a call toward an integrated service platform and for monitoring the duration of the call for a calculated number of remaining minutes received from a rating platform.

It is an object of the invention to provide a system and apparatus for rating network usage in a flexible and scalable manner.

### Summary of the Invention

In accordance with a first aspect of the present invention, there is provided event processing apparatus for use in processing service initiation request messages in an event processing system according to the appended claims.

Advantageously, the apparatus can communicate with, and control, service nodes that are currently used for post-pay subscribers, and which generate FCI/SCI messages, and accordingly is arranged to process these messages and selectively include them in a rating request message. Thus embodiments of the invention can realize the goal of real time billing for all subscribers, removing the distinction between prepay and postpay customer subscriptions. More specifically, by providing a function that identifies service nodes involved in processing of the network event and forwarding full service details to the rating node, services that are currently in the exclusive realm of postpay can be billed in real time. An alternative way of providing such real time billing of post pay customers would involve a converged prepay/post pay system design; such a design would apply what is essentially a prepay billing mechanism in respect of post pay services, and would result in use of trigger points currently used by post pay services for the purposes of billing. This is clearly unattractive, since it represents inefficient consumption of trigger points required for service provision.

In one arrangement according to the invention, the serving node might be a switch, whilst the service nodes would be nodes arranged to provide IN services or Open Service Architecture (OSA) services, in which case the event processing system would comprise an OSA gateway in operative association with the event processing apparatus. Conveniently said service initiation request messages correspond to service initiation triggers, and examples of service initiation triggers include CAP (CAMEL Application Protocol) and INAP (Intelligent Network Application Protocol) detection points; Mobility Application Part (MAP) events such as Forward Short Message (ForwardSM) and Location Update messages; and events associated with sending of data messages such as MMS (Multimedia Messaging Service) and SMS (Short Message Service) messages.

The rating node could be embodied as an IN or OSA application, and since the apparatus sends the rating node details of those services involved in a given network event, this means that the rating node can rate the event in full knowledge of relevant and comprehensive service information.

Thus with embodiments of the invention, the event processing system includes apparatus that controls interaction between, and invocation of, services involved in processing of a network event such as a call or message, and this apparatus essentially pushes data relating to the various services to a separate rating node. This is quite different to arrangements such as that described in WO03/073693, where firstly the central rating engine pulls charging information from given service nodes, and secondly there is no means for, or notion of, combining information from various services in order to rate the network event.

Preferably the rating node cooperates with a bespoke billing service that has been provisioned with tariff, bonus and special offer information on a per subscriber basis, and the billing service can process the service information received from the rating node, thereby enabling the rating node to rate the network event.

Conveniently the rating node is arranged to control service resource allocation, in so far as the rating response effectively comprises an allocated amount of network resources, together with a time period in respect of which the allocation is applicable. This information is sent onto the serving node, which controls the provision of network resources accordingly. An advantage of embodiments of the invention is thus that IN control is separated from account maintenance and billing thereof.

Conveniently the service rating request message includes data identifying service nodes and one or more attributes thereof corresponding to said service initiation trigger, and the function is arranged to identify, from data received during said control of said service nodes, said attributes thereof. A non-exhaustive list of such services and corresponding attributes include: flags indicating call to be home routed, number transformed, hunting occurred, interaction with IVR (Interactive Voice Response) occurred, call to private network subscriber, etc.; call set-up data indicating: original country and network originating codes, dialled digits, Virtual Private Network (VPN); service data indicating: tariff information, per application (e.g. application x tariff class, application y tariff class); service interaction status data indicating: response received; still in dialog or ended, per application.

In one arrangement the service rating request message comprises a first message comprising said service node identities and attributes thereof, and a second message comprising a service initiation request. The first message is sent in accordance with a first transport protocol and independently of said second message, which is sent in accordance with a second transport protocol. For example, the first message might be sent over an IP network, whilst the second message is sent as an IN service initiation trigger message.

In an alternative arrangement the service rating request message comprises a service initiation request and the apparatus is arranged to embed said data identifying service nodes, and one or more attributes thereof within said service initiation request message. Conveniently the service initiation request is embodied as a customised IN service initiation trigger message.

Conveniently the service response message comprises one or more requests for data indicative of occurrence of a specified event, for example, a specified amount of network usage and/or in the case of a call, busy; no answer etc. response from the network when the call is placed. In response to, e.g. a busy message, the function is arranged to retrieve alternative service data from the service nodes and generate a second service rating request message on the basis of the alternative data; the rating and call placement then progress in accordance with the functionality described above. The second, and as appropriate subsequent, service rating request messages include data informing the rating node of information that has a bearing on any previously rated part of the call.

Further features and advantages of the invention will become apparent from the following description of preferred embodiments of the invention, given by way of example only, which is made with reference to the accompanying drawings.

### Brief Description of the Drawings

Figure 1 is a schematic diagram showing components of a public land mobile network in which embodiments of the invention are arranged to operate;
Figure 2 is a schematic block diagram showing components of an event processing system according to an embodiment of the invention;
Figure 3 is a schematic block diagram showing, in more detail, a service interaction component of the event processing system shown in Figure 2, according to an embodiment of the invention;
Figure 4 is a schematic block diagram showing, in more detail, a billing application component of the event processing system shown in Figure 2, according to an embodiment of the invention;
Figure 5 is a flow diagram describing steps carried out by components of the event processing system during a first embodiment of an event rating process according to an embodiment of the invention; and
Figure 6 is a flow diagram describing steps carried out by components of the event processing system during a second embodiment of an event rating process according to an embodiment of the invention.

### Detailed Description of the Invention

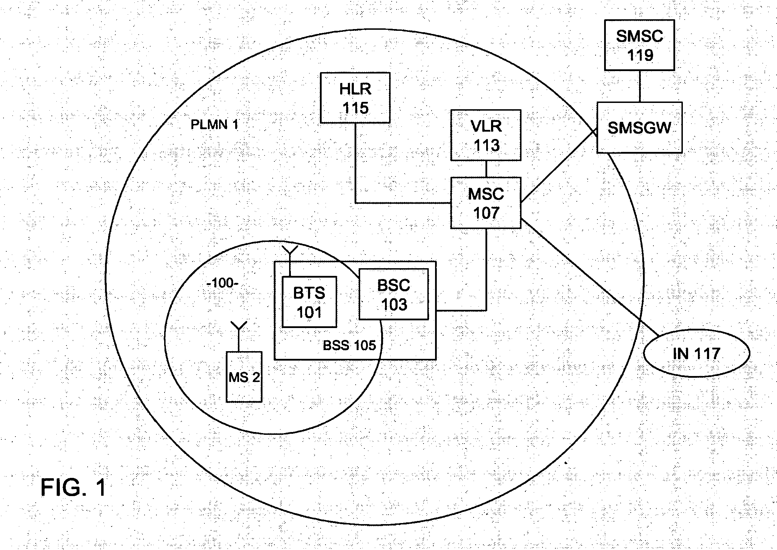

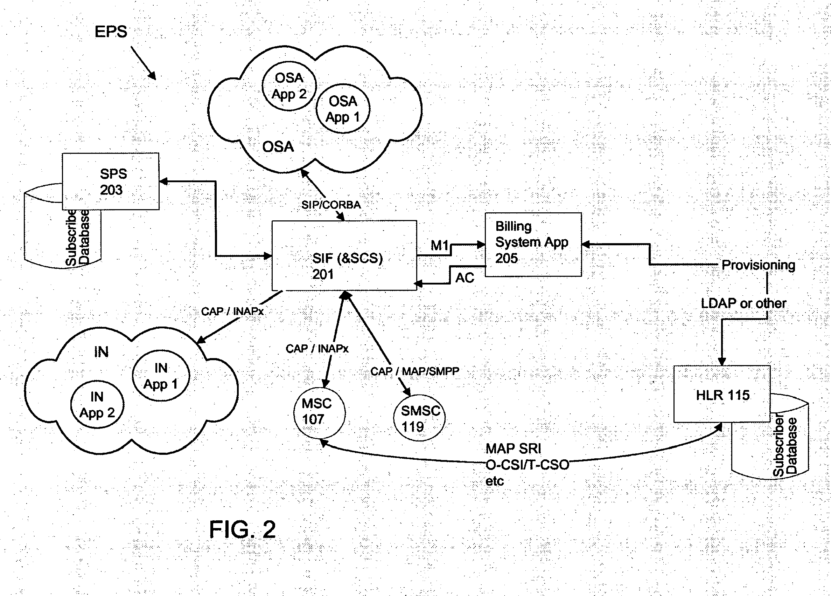

As described above, embodiments of the invention are concerned with system and apparatus for rating network usage in real time and in a flexible manner. In order to appreciate the level at which embodiments of the invention operate, an overview of the network capabilities will firstly be presented with reference to Figure 1, which shows a conventional mobile network arrangement comprising a Mobile Station (MS), serving node switch network component (Mobile Switching Centre, MSC) 107, and Home Location Register (HLR) 115, together with various IN and OSA nodes each arranged to provide a network service. Referring also to Figure 2, the MSC 107 is arranged to send messages to, and receive messages from, a Service Interaction Function (SIF) 201 in accordance with service parameter data received from the HLR 115 upon registration of the MS with the MSC or in accordance with settings that are statically configured within the home network. While the MS is registered with the MSC, the MSC monitors for occurrences of service triggers (so-called Detection Points (DPs)), and, when a trigger is identified, the switch MSC contacts the SIP 201, which, in turn, determines those service node(s) associated with the trigger. Access to network functionality, including functionality of the Intelligent Network, is controlled by the SIF 201 in conjunction with different Service Capability Servers (SCS), which appear as service capability features in an OSA interface. OSA applications such as App1 communicate with the SCS 201 via suitable OSA interfaces, while the underlying core network functions (Intelligent Network capabilities, MSC and HLR) use their specific protocols such as CAP and MAP (Mobility Application Part) to communicate with the OSA gateway.

Inter-application management is controlled by means of the SIF 201, which assumes the responsibility of communicating with the various intelligent network nodes and OSA application server nodes App1 ... Appₙ. The nature and order of invocation of applications is controlled in accordance with data received from a storage system referred to as a Subscriber Profile Store 203 (SPS), as is described in more detail below. Generally speaking, the SIF 201 is arranged to control inter OSA application interactions, inter IN service interactions and/or IN to OSA interactions such that multiple service applications can share trigger points such as the INAP and CAP detection point events listed above. Generally speaking the SIF 201 is configured to receive, from any SCF such as one including SCS shown in Figure 2, a service request message including some sort of trigger, perform a query upon the SPS database 203 in dependence on the received trigger, receive data from the SPS 203 in response to the query, invoke and co-ordinate whichever services and applications are identified by the data returned by the SPS 203 according to the event model logic associated therewith, and collate an overall response to send to the SCS to enable the devices in the network to continue with the network event (e.g. switching devices).

In addition to setting up and coordinating specific network services such as number translation services, message handling services, message modification services, voicemail services, call diversion services, hunting services and the like, the SIF 201 collects information associated with the services and applications identified by the data returned by the SPS 203, for forwarding to a billing application 205. This provides a means for the billing application 205 to rate a call and to allow, or otherwise, a call to progress on the basis of the outcome of the rating evaluation.

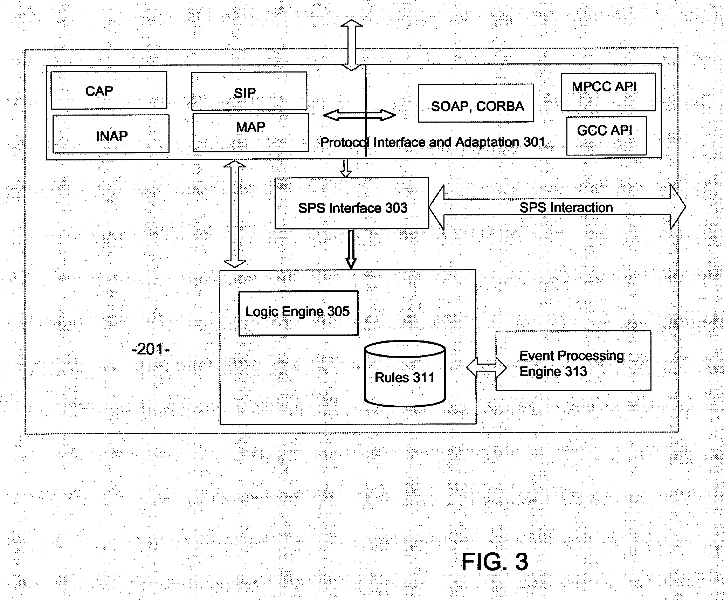

The components of the SIF 201 and functionality provided thereby will now be described with reference to Figure 3, which is a block diagram showing a breakdown of the SIF 201 in its component parts. In the present embodiment the SIF 201 comprises a services interface 301 for communicating with the applications App1 ... Appn and SCSs; an SPS interface 303 for communicating with the SPS 203, a logic engine 305 and an event processing engine 313. The services interface 301 is arranged to support at least the Session Initiation Protocol (SIP) and Application Programming Interfaces (APIs) such as CORBA and SOAP, and preferably to support CAP, INAP and MAP, thereby enabling the SIF 201 to communicate with a range of disparate network devices (i.e. to communicate directly with network devices such as switches in the mobile network (Public Land Mobile Network, PLMN) rather than via the SCS).

The logic engine 305 is the part of the SIF 201 that is arranged to request service data from the SPS 203, together with data identifying rules and details of service applications (in the form of rules 311 (at least some of which are received from the SPS 203 in real-time)), in dependence on the trigger and subscriber data. Having received these data, the logic engine 305 is arranged to invoke operation of a service node via the services interface 301, causing the event processing engine 313 to monitor for, and act upon, output from such invoked services. In particular, during processing of a call, the event processing engine 313 is arranged to perform transaction management, correlation management (e.g. correlate DPs received from different switches), timeout control (in relation to responses received from applications and services and the SPS 203); instance management (in relation to sequencing of services, and support for multiple simultaneous independent operations); and general administrative tasks such as statistics and alarm management. Further details of the structure and functionality of the SIF 201 is described at the end of the description.

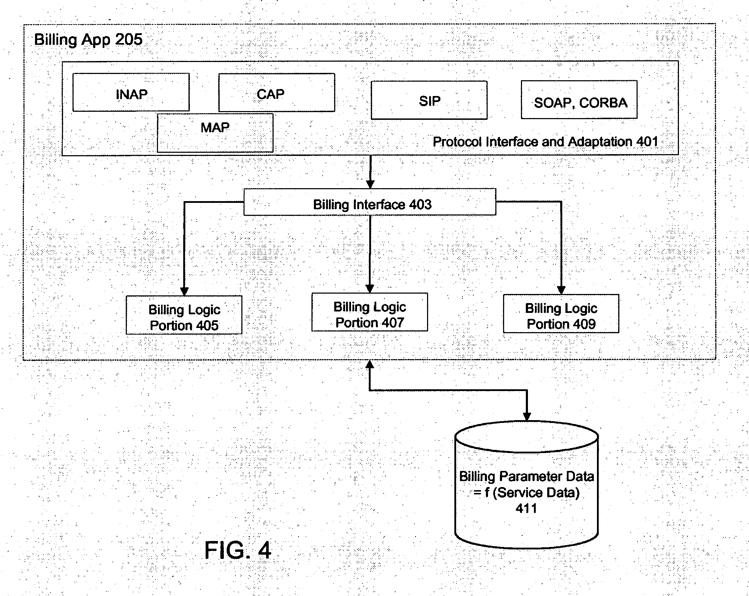

In one embodiment, the SIF 201 is arranged to collect all service-related information involved with processing of a call - the information having been established during call set-up - and, before progressing the call, to send a message M1 containing the service-related information to the billing application 205 (to be described in detail below); when received, the billing application 205 processes the service information by means of a billing logic portion 405, 407, 409 (shown in Figure 4 to be described in detail below) and returns an event notification to the SIF 201 such as an ApplyCharging (AC) instruction.

In at least some arrangements the service information sent to the billing application 205 includes data identifying the services to be involved in processing the call, together with the status thereof and various billing related call set-up messages, including FurnishChargingInformation (FCI) and SendChargingInformation (SCI) messages (which, as described above, are traditionally associated with CDR billing mechanisms). These messages are typically received by the SIF 201 from service/application nodes App1 ... Appₙ as part of the response to receipt of an Initial Detection Point (IDP) during call set-up and also during the monitoring phase of a call, when nodes can send update FCI/SCI messages in response to receipt of ERB (Event Report BCSM (Basic Call State Model)) triggers.

Turning now to the aspects of the billing system 205, and with reference to Figure 4, the billing interface 403 is arranged to extract information, from both the event set-up messages and service status data, and to pass the same to logic portions 405, 407, 409 for rating the network event. The logic portions 405, 407, 409 can have access to business logic and subscriber-specific data (described in more detail below) which specify use and combination of tariff classes and usage scheme resource allocations associated with the subscriber.

Alternatively, the service information can simply include data identifying the services to be involved in processing the network event, together with the status thereof (i.e. no FCI/SCI set-up charging messages), and the billing interface 403 is arranged to extract service information, passing this to the billing logic portions for processing. This would be appropriate for arrangements in which the billing application 205 is equipped with sufficient information, in terms of service-related business logic, so as to remove the need to send FCI/SCI messages.

The sort of service-related information that is included in the service interaction message MI sent from the SIF 201 to the billing application 205 includes the following, exemplary and non-exhaustive parameter types:
- flags indicating:
   call to be home routed, number transformed, hunting occurred, interaction with IVR occurred, call to private network subscriber, etc.;
- call set-up data indicating:
   original country and network originating codes, dialled digits, VPN;
- service data indicating:
   tariff information, per application (e.g. application x tariff class, application y tariff class);
- service interaction status data indicating:
   response received; still in dialog or ended, per application etc.

In a first embodiment, the service interaction message M1 is embodied as an IDP message, the services data being embedded within the extensions [15] parameter. Suitable ASN1 syntax for the extensions parameter might take the following form:

```
 extensions [15] IMPLICIT SEQUENCE OF
       services SET OF {
              SEQUENCE {
                             serviceId INTEGER,
                             service Status ENUMERATED,
                             serviceCurrentlyActive BOOLEAN
                             tariffClass INTEGER OPTIONAL
                             },
               homeRouted BOOLEAN,
               hunted BOOLEAN,
       etc.
```

The billing interface 403 is arranged to identify the extensions parameter from message M1 and extract the data therein for processing by respective billing logic portions 405, 407, 409.

In a second embodiment, the service interaction details are embodied within a message of a different protocol to that used in conjunction with IN messages (e.g. an IP based message or API (eg LDAP / CORBA)); such a message will hereinafter be referred to as a provideSID message. The provideSID message typically includes service related information and optionally set-up messages together with service interaction details (SID) and the transaction ID (or other correlation ID) that will be used in a subsequent IDP message sent as the final part of the event set-up process (and which triggers the billing application 205 to rate the event and issue an Apply Charging (AC) message). A suitable correlation ID might be a combination of the Originating Transaction ID (OTID) associated with the dialog between the SIF 201 and the billing application 205, the calling Party number (CgPN), and an identifier that uniquely identifies the SIF 201 (e.g. SCCP address Global title), each of which is contained within the provideSID message. Alternatively the correlation ID might simply comprise the OTID.

In the second embodiment the message containing the service details can be sent somewhat independently of the set-up process (although it will be constrained by receipt of all of the service related information from the application and service nodes identified to be involved in the network event), enabling the billing application to get a "head start" and rate the event, so that once the IDP containing the correlation data is received, a result is potentially available for immediate response. It will therefore be appreciated that the second embodiment involves a service interaction message M1 comprising two messages.

As described above, logic portions 405, 407, 409 cooperate with a database 411 provisioned with data specifying subscriber identity, type, entitlement, per-service charging rates, bundles, special offers, and credit status. Each logic portion 405, 407, 409 is responsive to one or more data items extracted from service interaction message M1 by the billing interface 403, so as to query database 411 and rate the event. This means that, in the case of a call, the call will be rated in accordance with the most current charging information particular to the call and subscriber in question. In one arrangement the database 411 forms part of a separate, but cooperating billing and mediation system capable of receiving credit reservation requests and determining appropriate credit reservations on the basis of the subscriber details and call/service details . Whilst Figure 4 shows there to be three portions, it will be appreciated that this is illustrative only and that there might be one or any number of such portions, depending on the software paradigm used to create the billing application 205.

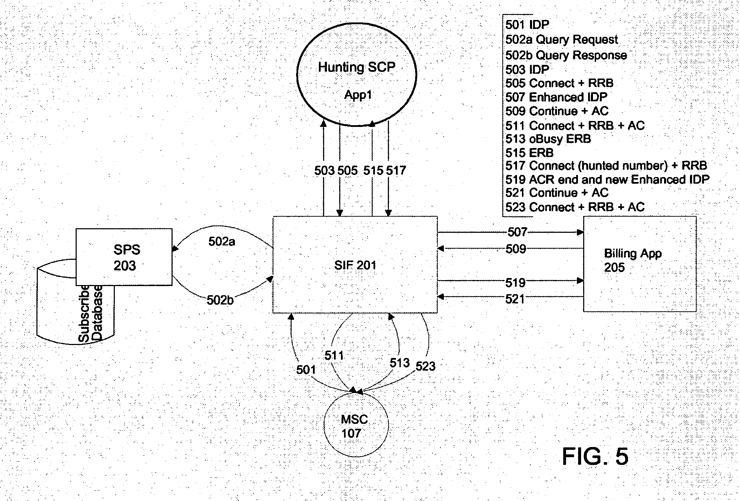

Embodiments of the invention will now be described with reference to several example scenarios involving processing of incoming calls from a mobile station MS 2. The first scenario, shown in Figure 5, relates to the first embodiment of the invention, in which the service interaction message M1 is embodied as an enhanced IDP message, and the steps involved from call set-up request through to call connection will be described.

When a message is received by the SIF 201, at step 501, it identifies the type of message. In this example, the type of message is identified to be a service set-up message, and, since the IDP represents a new call, the SIF 201 formulates a query (step 502a), using e.g. the Directory Access Protocol (DAP), so as to retrieve data from the SPS 203. The SPS 203 returns data in accordance therewith (step 502b), the data comprising a selection of rules and service information specifying the services to which the subscriber MS 2 has access and the conditions in which the services can be accessed. In the present example, the SPS 203 query returns the following data:
- Service applications:
   o Hunting Application (several devices registered)
- Conditions:
   o Rule (1): Check whether SHR applicable (i.e. is MSC in visited network (VPLMN)?); If applicable, send correlation address to switch in VPLMN and await correlating response from GMSC;
   o Rule (2): Once MS 2 connected via home network (HPLMN), send Connect message to switch in HPLMN;
   o Rule (3): Action Hunting Application and return response to MSC
   o Rule (4): If Hunting appln and other applications request RRB (Request Report BCSM) busy messages, send any received ERB busy messages to Hunting appln first, retrieve new destination routing address (DRA) (i.e. DRA corresponding to second device), end dialogue with other application on the basis of the first DRA, and start a new initial dialog (IDP) using this modified DRA to the other application.

In this example the hunting application App1 is arranged to ascertain which of a Called Party's (subscriber's) registered devices is active.

Turning back to Figure 5, the SIF sends a request (step 503) for a number translation service to App1. As described above, App1 is a iVPN hunting application having access to a prespecified list of devices registered for the subscriber, and, in response to the service request message sent from the SIP at step 503, sends back (step 505) a translated, full digit number corresponding to a first device in the list, together with a request for an RRB busy message in the event that the device is unavailable and one or more charging messages such as FCI/SCI messages. In response to receipt of the translated number of the first device from App1, and in view of the fact that no other services are registered in respect of the subscriber, the SIF formulates an enhanced IDP message M1, including details relating to the services involved in this call - more specifically setting a flag to indicate that hunting has occurred, together with details of the translated number (DRA) - and sends message M1 (step 507) to the Billing Application 205. For this specific example, (involving one service node only) a suitable enhanced IDP message could include the following data:

```
 extensions {
              [application ID],
              [hunting status] 0 first time, 1 second time
              [service active] 1
              [tariff class] anything extracted from SCI
              },
       hunted 0 first time, 1 second
       etc.
```

For network events involving more than one service node, details of the second and other application, are listed within the extension field. In the event that the billing application 205 is equipped with charging logic (such that application specific call set-up charging messages such as FCI/SCI messages are redundant) any enhanced IDP message M1 including the charging messages will be processed as described above, and the FCI/SCI messages will be discarded. If the SIF 201 is provisioned with data indicative of the billing application 205 requirements, the SIF 201 can selectively extract parts of the data and messages received from the various IN and/or OSA applications involved in the call, and include the extracted information in message M1. For example, in response to receipt of an SCI message, the SIF 201 could extract data indicative of the tariff class, insert that into the enhanced IDP message M1 for transmission to the billing application 205, and discard the SCI message.

Returning to features of the billing application 205, in response to receipt of the message M1, billing application 205 extracts information from the IDP parameters, in accordance with standard methods, sending the extracted data associated with the extensions parameter, together with data identifying the subscriber, to a billing logic portion 405, 407, 409 in accordance with rules specified in the billing interface 403. The associated billing logic portion reviews the extracted data in accordance with data accessible via store 411, and returns data indicative of whether or not the call is authorized to proceed. Assuming the call is authorized to proceed, the billing interface 403 formulates CONTINUE and Apply Charging (AC) messages, the latter including data specifying a period for which the call can proceed, and sends these messages to the SIF 201 at step 509.

The SIF 201 then consolidates the input from application App1 and the Billing Application 205, and sends a connection request in respect of the first device to MSC (step 511). In the present example the first device is unavailable so the MSC returns an ERB busy message to the SIF (step 513); according to the rules applicable in this example, the SIF is arranged to prioritise receipt of ERB busy messages and send them to the hunting application App 1 in the first instance, whilst marking the fact that Billing Application 205 needs to be informed of the fact that the first device is unavailable and needs to terminate the charging request. Having received an ERB busy message the SIF 201 sends the ERB busy message to App1 (step 515), which, in response thereto, retrieves and transmits details of a second device in the subscriber's list to the SIF 201, possibly with further charging-related call set up messages FCI/SCI (step 517). Upon receipt of the identity of this second device, the SIF 201 formulates a new enhanced IDP message M1 on the basis of the identity of this second device at step 519 and sends the same, together with a message terminating the session in relation to the first device, to the Billing Application 205 (by means of an ACR message either carried in a TC_END message or an ACR message comprising information (e.g. zero cost) from which the Billing Application 205 can establish that the session has ended, or by means of a Disconnect ERB).

As for the enhanced IDP message sent at step 507, the message M1 sent at step 519 includes a flag to indicate that hunting has occurred, together with details of the second translated number (DRA). As before, upon receipt of message M1 the billing application 205 extracts the parameters and sends them to a billing logic portion via billing interface 403. The associated billing logic portion reviews the extracted data in accordance with data accessible via store 411, and proceeds to rate the call, returning data indicative of whether or not the call is authorized to proceed. Assuming the call proceeds, the billing interface 403 formulates a CONTINUE message and Apply Charging request and sends this to the SIF 201 at step 521.

The SIF 201 again consolidates input from application App1 and the Billing Application 205 and sends a connection request in respect of the second device to vMSC (step 523); subsequent steps (not shown) proceed in dependence on the availability or otherwise of the second device (i.e. if the second device is unavailable steps 513 - 523 are effectively repeated, whereas if the second device is available, the MSC proceeds to process the call).

It will be appreciated from the foregoing that, in view of the fact that the service-related information is embedded within the IDP standard extensions parameter, any Intelligent Network-compatible third party billing application can conveniently extract information from the message M1. This therefore provides an efficient, coordinated and scalable solution to the problem of billing an ever increasing range of services.

Furthermore it will be appreciated that when the billing application 205 has access to database 411, which is provisioned with data specifying a comprehensive amount of information relating to charging rates, bundles, special offers, and credit status, the response to an ACR request will be better tailored to the credit status and habits of individual customers.

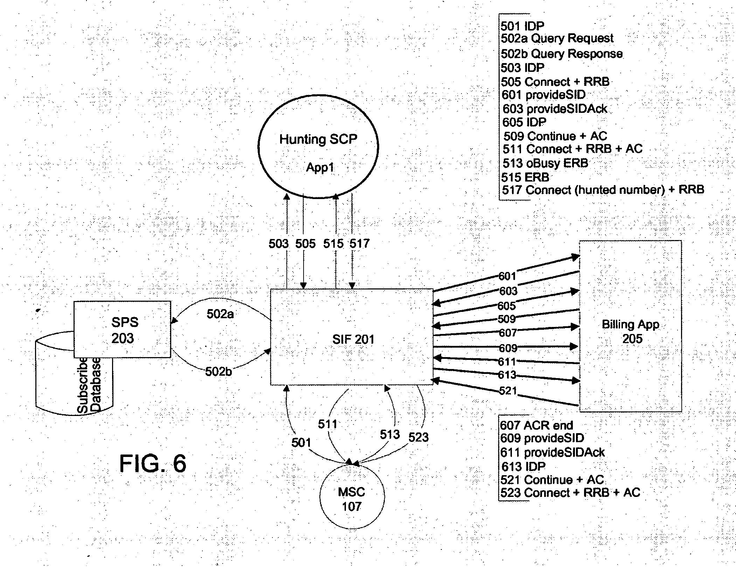

Turning now to Figure 6, a method of processing a call according to the second embodiment will now be described; steps that are identical to those described in relation to Figure 5 are labeled using the same reference numerals as shown in Figure 5 and no further reference will be made thereto, whereas steps that are different have been given different reference numerals and features thereof will now be described in more detail.

It will be seen from inspection of Figure 6 that the second embodiment involves additional steps, (namely 601, 603, 605, 607, 609, 611, 613) not involved in the first embodiment: this is due to the fact that, in the second embodiment, service information is sent independently, both in terms of time and transport mechanism, of the message that triggers the billing application 205 to rate the call. More specifically, steps 601 and 609 involve sending the message containing the service data (provideSID) to the billing application 205, and receiving an acknowledgement (providSIDack) in respect thereof (steps 603, 611) before sending the correlating IDP message (steps 605, 613).

It will be appreciated from the foregoing that embodiments of the invention enable a network event to be rated in view of all of the services involved in the event, and that the architecture of the event processing system, in terms of the SIF 201 collating the service information and sending the collated information to a bespoke billing application 205, enables this advantage to be realized in a particularly efficient manner. For example, by logically separating the functions of event processing from billing (so that each effectively appears to the other as a black box), the event processing function and the billing function can each be arranged so as to optimise constraints particular to their respective functions, in terms of architecture (software components and data storage systems), and operations (in relation to upgrading software and distributing hardware and software).

More particularly, embodiments of the invention facilitate real-time billing - which conventionally has only been applied in respect of prepay users - of post pay customers: real-time billing functionality is extended to post pay subscribers by the event processing apparatus collating all service-related information and sending this to the rating node before progressing the network event

The above embodiments describe resource allocation being performed under the control of AC/ACR messages sent by the billing application 205, which means that the MSC 107 is effectively configured to control allocation of the resource for a period of time specified in a given AC message. Once this period has expired (or sooner, if there is a problem allocating a resource), the SIF 201 sends an ACR message to the billing application 205 (which, in the event that there is a problem allocating a resource, can be accompanied by data ending the charging session). As an alternative, the billing application 205 could directly control temporal aspects of resource allocation by means of connect and disconnect event messages passing between the billing application 205 and the SIF 201.

### Details of SIF 201

The features and functionality of the event processing engine 313 will now be described in more detail. The event model logic returned from the SPS 203 (typically in the form of rules 311) is effectively used to control the sequence in which applications are invoked with initial and subsequent messages, thereby resolving the problem of distributing single triggers resulting from a trigger point. Where the output of one service application influences operation of another service application, invocation is synchronous, but if the output from various service applications is simply combined by the event processing engine 313, the service applications are preferably invoked asynchronously so as to improve latency. It can therefore be seen that inter-application processing is managed at the time of processing a call by means of the rules retrieved from the SPS 203. In addition to the SPS 303 returning sequencing rules in respect of OSA triggers such as callEventNotify () and IN triggers such as InitialDP triggers, there are rules for processing event notifications (ERB (IN), RouteRes() (OSA)) applyCharging (AC/ACR (IN), superviseCallReq()/superviseCallRes() (OSA)) messages, temporary call and resource access (ETC/CTR) and any resultant responses therefrom.

The event processing engine 313 is additionally arranged to control operation of multiple service applications that generate conflicting events and actions. Taking a simple example, if multiple service applications return a CONNECT (IN) or routeRequest() (OSA) message, the event processing engine 13 applies various rules in order to identify which of the messages 'wins'; and in another simple example, if a CONNECT/routeRequest() message and a RELEASE (IN) or release() (OSA) message is returned by different service applications, the event processing engine 313 applies various rules to identify which of the two conflicting actions is taken. Essentially, therefore, the outputs are processed in accordance with an appropriate rule retrieved from the SPS 203 associated with the conflicting event and/or action.

The event processing engine 313 is arranged to handle communication failures, in accordance with the dynamic (i.e. configurable) rules retrieved from the SPS 203, dependent on the type of failure. For example, if a first service application aborts, one option is that the whole transaction aborts, whilst another might be that if the first service application succeeds but the second fails, the response from the first should take precedence.

The event processing engine 313 is also configured to monitor for responses within a predetermined time period, wherein, in the event that a service application response or response from the SCS fails to arrive, the SIF 201 performs one of a plurality of actions. For example, in the case of a service application failing to respond within the specified time period, the SIF could trigger the SCS to send a Protocol TCAP failure response into the network depending on the associated error rules. The error and timeout rules could be static rules stored and maintained by the SIF 201.

In summary, the logic engine 305 and event processing engine 313 controls the following actions in accordance with conditions specified in the fixed, dynamic and static rules:
i. The order in which service applications are invoked;
ii. How responses from service applications are combined;
iii. How subsequent transactions based on responses from the service applications shall be performed;
iv. Whether the call control is managed by the SIF, or delegated to a service application; and
v. Whether applications should be excluded from invocation as a function of the type of network (e.g. home or roaming).

A non-limiting list of examples of some fixed rules will now be described:
- Requests are cumulative: if service application A requests RRB) DPx and application B requests RRB DPy then the result shall request RRB DPx and DPy. (A Request Report BCSM is referred to herein as RRB and is a request to create trigger points for later in the communications flow - e.g. Busy, Disconnect, Answer, No answer; in the Parlay domain, the equivalent of a RRB is a routerequest() message with associated reponseRequested parameters specifying a particular monitor mode and report type). If these points are triggered, an Event Report BCSM (ERB) (or, in the Parlay domain, a RouteRes() message) is automatically generated);
- If there are multiple RRB requests (or routeRequest() messages) for the same trigger then only a single invocation shall be requested;
- If there are multiple RRB requests (or routeRequest() messages) for the same trigger then the monitor mode shall be the highest requested;
- CONTINUE (or routeRequest() with no destination address) shall only be returned if all service applications indicate continue;
- If there is only one service application listed for a subscriber / DP then the SIF shall drop out of the call, i.e. forward the InitialDP or callEventNotify() (as appropriate) message to the service application, with the response routed directly back to the initiating switching node;
- If there are no service applications defined then the SIF shall return a CONTINUE (or routeRequest() with no destination address) response;
- The SIF shall drop out of the flow at the earliest possible opportunity; e.g. if only CONTINUE (or routeRequest() with no destination address), CONNECT (or routeRequest() with destination address) or RELEASE (or release() message in the Parlay domain) is returned to the MSC, or if all expected MSC responses are destined for a single application;

It will be appreciated from the foregoing that the billing application 205 appears to the SIF 201 as another network node offering a particular network service, and that the SIF 201 controls the call set-up process by sending a rating request to the billing application 205 as a final step of the set-up process; a convenient way of effecting this functionality is to implement a fixed rule specifying that the last service request message is always sent to the billing application 205, and that the message comprises a service interaction message M1.

A non-limiting list of examples of the dynamic rules will now be described:
- The order of Initial DP, or callEventNotify(), relay to service applications shall be in the configured precedence order;
- If service applications can be invoked asynchronously then they should be, since this will improve latency;
- If the response is RELEASE (or a release() message in the Parlay domain), then the overall response shall be governed by the release precedence of the service application. If there is a service application with a higher release priority that has not returned a RELEASE (or release() message, as appropriate) (i.e. if it has returned a CONTINUE or CONNECT (or routeRequest() with or without destination address)) then the RELEASE (or release() message) from the lower priority service application shall be ignored. If the RELEASE (or release() message in the Parlay domain) is from the application with the highest release priority, then the remaining service applications need not be actioned; and a RELEASE/release() message and TCAP END (or callEnded() in the Parlay domain) shall be returned;
- If a CONNECT/routeRequest() message is returned, then the called / calling party returned to the switching node shall be that from the service application with the highest connect precedence;
- ...

A non-limiting list of examples of the scripted rules will now be described:
- Charging Reports (ACR (or supervisecallRes() messages in the Parlay domain)) shall be distributed only to those applications that contributed to the AC (or superviseCallReq() message in the Parlay domain) previously generated. There may be complex calculations required to massage the ACR/superviseCallRes() message in to an appropriate form for each service application;
- Following an ERB Busy Report, (or RouteRes() message with parameters indicating that a party is busy), a CONNECT/routeRequest() message relating to a different number shall be returned (this may invalidate all previous interactions with other applications, so a script might be used to abort some applications or modify behavior explicitly, potentially using messages generated specifically for this purpose);
- Where action is dependent on content within a message, a script can be used to identify the content within the message and invoke an appropriate action.
- ...

In addition to the fixed, dynamic and static rules described above, the SIF 201 operates in accordance with several general rules, which include the following:
- The SIF shall end the TCAP dialogs with TC_END (or callEnded() in the Parlay domain) when the response to the MSC is a simple CONNECT, CONTINUE (routeRequest() message with or without destination address) or RELEASE/release() message (basic end).
- The SIF shall end the transaction without a TC_END (or callEnded() message) if it determines that there are no more messages expected (e.g. ACR/superviseCallRes() received indicating end of call, and no later trigger points armed) - this is known as a pre arranged end, and no further messages are sent.
- The SIF shall end all open dialogs if it receives a TC_ABORT (or callFaultDetected() message) - by relaying the abortive message.
- The SIF shall end all open dialogs if it receives a TC_END (or callended() message) from the MSC - by relaying the TC_END.
- The SIF shall end the dialog with a TC_END (or callEnded() message) if unexpected errors occur.

It will be appreciated that in this, and other embodiments, that the protocol and/or APIs used in the rules are those appropriate to the services involved, and are not restricted to INAP, CAP, GCC, MPCC. Further details of the functionality of the SIF are described in Applicant's co-pending international patent application having publication number WO2005/099239.

The above embodiments, which relate to processing any type of IN network events, are to be understood as illustrative examples of the invention. Further embodiments of the invention, such as collation of data relating to Open Services Architecture (OSA) applications and rating the applications in real time, are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Event processing apparatus (201) for use in processing service initiation request messages in an event processing system, the apparatus being connectable to a plurality of service nodes (App 1, App 2) from which a subscriber is able to receive service during processing of a network event, and being connected to a rating node (205) arranged to rate the network event, the apparatus comprising a function (313) arranged, on receiving (501) a service initiation request message corresponding to a requested network event, the service initiation request message having been sent by a serving node (107) in a network currently involved in processing the requested network event, to:
query (502a, 502b) a subscriber profile store (203) on the basis of subscriber data and trigger data derivable from the service initiation request message so as to identify one or more service nodes involved in the requested network event;
send (503) a service request message to each identified service node; and
receive (505) corresponding service data from the one or each identified service node,
wherein, in response to said service data received from the one or each identified service node, the function is arranged to generate a service rating request message (M1) and to transmit (507) same to the rating node, said service rating request message comprising said service data received from the one or each identified service node, and on receiving (509) a rating response comprising data indicative of a connection instruction from said rating node, to generate a service response message and to transmit (511) same to the serving node from which the service initiation request message is received, whereby said service response message transmitted to the serving node is dependent on the connection instruction received from the rating node.

2. Event processing apparatus according to claim 1, wherein the service initiation request message includes data identifying the corresponding service initiation trigger, and the function is arranged to access data identifying service nodes corresponding to said service initiation trigger, for use in retrieving said service data corresponding to said service nodes.

3. Event processing apparatus according to claim 1 or claim 2, wherein the function is arranged to control operation of a plurality of service nodes in accordance with the retrieved service data so as to generate said service rating request message.

4. Event processing apparatus according to any one of the preceding claims, wherein the service rating request message includes data identifying service nodes and one or more attributes thereof corresponding to said service initiation trigger.

5. Event processing apparatus according to claim 4, wherein the function is arranged to identify, from data received during said control of said service nodes, said attributes thereof.

6. Event processing apparatus according to claim 5, wherein the service rating request message comprises a first message comprising said service node identities and attributes thereof, and a second message comprising a service initiation request.

7. Event processing apparatus according to claim 6, wherein the first message is sent independently of said second message.

8. Event processing apparatus according to claim 7, wherein the first message is sent in accordance with a first transport protocol and the second message is sent in accordance with a second transport protocol.

9. Event processing apparatus according to claim 8, wherein said second transport protocol is different to said first transport protocol.

10. Event processing apparatus according to claim 5, wherein the service rating request message comprises a service initiation request and the apparatus is arranged to embed said data identifying service nodes, and one or more attributes thereof, within said service initiation request message.

11. Event processing apparatus according to claim 10, wherein the service initiation request message is an intelligent network initial detection point IDP message.

12. Event processing apparatus according to any one of the preceding claims, wherein said service response message comprises one or more requests for data indicative of occurrence of a specified event.

13. Event processing apparatus according to claim 12, wherein the function is arranged, on receiving said data indicative of a specified event, to identify one or more service nodes associated with the event and to retrieve second service data in relation thereto, wherein the function is arranged to generate a second service rating request message on the basis of the second service data and to transmit same to the rating node, and on receiving a second rating response from said rating node, to generate a second service response message and to transmit same to the serving node from which the event data were received.

14. Event processing apparatus according to claim 12 or claim 13, wherein each rating response includes data for use in triggering a charging event in respect of at least part of the network event.

15. Event processing apparatus according to claim 14, wherein the second rating request message comprises control data associated with said rating response for use in terminating charging associated therewith.

16. An event processing system for use in processing service initiation request messages, the system comprising:
a plurality of service nodes (App 1, App 2) from which a subscriber is able to receive service during processing of a network event;
a rating node (205) arranged to receive data indicative of the services associated with said processing of the network event so as to generate a rating response for use in controlling rating thereof;
a subscriber profile store (203) arranged to store subscriber data and trigger data corresponding to service initiation request messages;
a serving node (107) in a network currently involved in processing of the network event; and
event processing apparatus (201) according to any one of the preceding claims.

17. A method of processing service initiation request messages in an event processing system, the event processing system comprising a plurality of service nodes (App 1, App2) from which a subscriber is able to receive service during processing of a network event, a rating node (205) arranged to rate the network event, and a serving node (107) in a network currently involved in processing of the network event, the method including the steps of:
responsive to receipt (501) of a service initiation request message from said serving node (107) and corresponding to a requested network event, querying (502a, 502b) a subscriber profile store (203) on the basis of subscriber data and trigger data derivable from the service initiation request message so as to identify one or more service nodes involved in the requested network event;
sending (503) a service request message to each identified service node;
receiving (505) corresponding service data from the one or each said identified service node;
transmitting (507) a service rating request message to the rating node, the service rating request message comprising said service data received from the or one each identified service node;
rating the network event on the basis of the service rating request message; and
responsive to a rating response (509) comprising data indicative of a connection instruction from said rating node, generating and transmitting (511) a service response message for transmission to the serving node from which the service initiation request message is received, in which said service response message transmitted to the serving node is dependent on the connection instruction received from the rating node.

18. A method according to claim 17, including embedding data identifying service nodes and one or more attributes thereof within said service initiation request message.

19. A method according to claim 17 or claim 18, in which the service initiation request message is an intelligent network initial detection point (IDP) message.

## Patentansprüche

1. Ereignisverarbeitungsvorrichtung (201) für die Verwendung in Verarbeitungsdienstinitiierungs-Anforderungsnachrichten in einem Ereignisverarbeitungssystem, wobei die Vorrichtung mit mehreren Dienstknoten (App 1, App 2) verbunden werden kann, von denen ein Teilnehmer während der Verarbeitung eines Netzereignisses einen Dienst empfangen kann, und mit einem Bewertungsknoten (205) verbunden ist, der dazu ausgelegt ist, das Netzereignis zu bewerten, wobei die Vorrichtung eine Funktion (313) aufweist, die dazu ausgelegt ist, bei Empfang (501) einer Dienstinitiierungs-Anforderungsnachricht, die einem angeforderten Netzereignis entspricht, wobei die Dienstinitiierungs-Anforderungsnachricht durch einen dienenden Knoten (107) in einem Netz, der momentan mit der Verarbeitung des angeforderten Netzereignisses beschäftigt ist, gesendet worden ist:
einen Teilnehmerprofilspeicher (203) anhand von Teilnehmerdaten und von Auslöserdaten, die aus der Dienstinitiierungs-Anforderungsnachricht ableitbar sind, abzufragen (502a, 502b), um einen oder mehrere Dienstknoten, die mit dem angeforderten Netzereignis beschäftigt sind, zu identifizieren;
eine Dienstanforderungsnachricht an jeden identifizierten Netzknoten zu senden (503); und entsprechende Dienstdaten von dem oder jedem identifizierten Netzknoten zu empfangen (505),
wobei die Funktion dazu ausgelegt ist, in Reaktion auf die von dem oder jedem identifizierten Dienstknoten empfangenen Dienstdaten eine Dienstbewertungs-Anforderungsnachricht (M1) zu erzeugen und diese an den Bewertungsknoten zu übertragen (507), wobei die Dienstbewertungs-Anforderungsnachricht die von dem einen oder jedem identifizierten Dienstknoten empfangenen Dienstdaten enthält, und bei Empfang (509) einer Bewertungsantwort von dem Bewertungsknoten, die Daten enthält, die einen Verbindungsbefehl angeben, eine Dienstantwortnachricht zu erzeugen und diese an den Dienstknoten, von dem die Dienstinitiierungs-Anforderungsnachricht empfangen worden ist, zu übertragen (511), wobei die an den Dienstknoten übertragene Dienstantwortnachricht von dem Verbindungsbefehl, der von dem Bewertungsknoten empfangen wird, abhängt.

2. Ereignisverarbeitungsvorrichtung nach Anspruch 1, wobei die Dienstinitiierungs-Anforderungsnachricht Daten enthält, die den entsprechenden Dienstinitiierungsauslöser identifizieren, und die Funktion dazu ausgelegt ist, auf Daten zuzugreifen, die Dienstknoten identifizieren, die dem Dienstinitiierungsauslöser entsprechen, um bei der Wiedergewinnung von Dienstdaten, die den Dienstknoten entsprechen, verwendet zu werden.

3. Ereignisverarbeitungsvorrichtung nach Anspruch 1 oder Anspruch 2, wobei die Funktion dazu ausgelegt ist, die Operation mehrerer Dienstknoten in Übereinstimmung mit den wiedergewonnenen Dienstdaten zu steuern, um die Dienstbewertungs-Anforderungsnachricht zu erzeugen.

4. Ereignisverarbeitungsvorrichtung nach einem der vorhergehenden Ansprüche, wobei die Dienstbewertungs-Anforderungsnachricht Daten enthält, um Dienstknoten und ein oder mehrere Attribute hiervon, die dem Dienstinitiierungsauslöser entsprechen, zu identifizieren.

5. Ereignisverarbeitungsvorrichtung nach Anspruch 4, wobei die Funktion dazu ausgelegt ist, aus Daten, die während der Steuerung der Dienstknoten empfangen werden, die Attribute hiervon zu identifizieren.

6. Ereignisverarbeitungsvorrichtung nach Anspruch 5, wobei die Dienstbewertungs-Anforderungsnachricht eine erste Nachricht, die die Dienstknotenidentitäten und deren Attribute enthält, und eine zweite Nachricht, die eine Dienstinitiierungsanforderung enthält, enthält.

7. Ereignisverarbeitungsvorrichtung nach Anspruch 6, wobei die erste Nachricht unabhängig von der zweiten Nachricht gesendet wird.

8. Ereignisverarbeitungsvorrichtung nach Anspruch 7, wobei die erste Nachricht in Übereinstimmung mit einem ersten Transportprotokoll gesendet wird und die zweite Nachricht in Übereinstimmung mit einem zweiten Transportprotokoll gesendet wird.

9. Ereignisverarbeitungsvorrichtung nach Anspruch 8, wobei das zweite Transportprotokoll von dem ersten Transportprotokoll verschieden ist.

10. Ereignisverarbeitungsvorrichtung nach Anspruch 5, wobei die Dienstbewertungs-Anforderungsnachricht eine Dienstinitiierungs-Anforderung enthält und wobei die Vorrichtung dazu ausgelegt ist, die Daten, die Dienstknoten identifizieren, und ein oder mehrere Attribute hiervon in die Dienstinitiierungs-Anforderungsnachricht einzubetten.

11. Ereignisverarbeitungsvorrichtung nach Anspruch 10, wobei die Dienstinitiierungs-Anforderungsnachricht eine Anfangserfassungspunkt-Nachricht, IDP-Nachricht, eines intelligenten Netzes ist.

12. Ereignisverarbeitungsvorrichtung nach einem der vorhergehenden Ansprüche, wobei die Dienstantwortnachricht eine oder mehrere Anforderungen für Daten, die das Auftreten eines spezifizierten Ereignisses angeben, enthält.

13. Ereignisverarbeitungsvorrichtung nach Anspruch 12, wobei die Funktion dazu ausgelegt ist, bei Empfang der Daten, die ein spezifiziertes Ereignis angeben, einen oder mehrere Dienstknoten, die dem Ereignis zugeordnet sind, zu identifizieren und zweite Dienstdaten, die damit in Beziehung stehen, wiederzugewinnen, wobei die Funktion dazu ausgelegt ist, anhand der zweiten Dienstdaten eine zweite Dienstbewertungs-Anforderungsnachricht zu erzeugen und diese an den Bewertungsknoten zu übertragen und bei Empfang einer zweiten Bewertungsantwort von dem Bewertungsknoten eine zweite Dienstantwortnachricht zu erzeugen und diese an den dienenden Knoten, von dem die Ereignisdaten empfangen wurden, zu übertragen.

14. Ereignisverarbeitungsvorrichtung nach Anspruch 12 oder Anspruch 13, wobei jede Bewertungsantwort Daten zur Verwendung beim Auslösen eines Ladeereignisses in Bezug auf wenigstens einen Teil des Netzereignisses enthält.

15. Ereignisverarbeitungsvorrichtung nach Anspruch 14, wobei die zweite Bewertungsanforderungsnachricht Steuerdaten enthält, die der Bewertungsantwort zugeordnet sind, um beim Beenden des hiermit in Beziehung stehenden Ladens verwendet zu werden.

16. Ereignisverarbeitungssystem zur Verwendung in Verarbeitungsdienstinitiierungs-Anforderungsnachrichten, wobei das System enthält:
mehrere Dienstknoten (App 1, App 2), von denen ein Teilnehmer während der Verarbeitung eines Netzereignisses einen Dienst empfangen kann;
einen Bewertungsknoten (205), der dazu ausgelegt ist, Daten zu empfangen, die die der Verarbeitung des Netzereignisses zugeordneten Dienste angeben, um eine Bewertungsantwort zur Verwendung bei der Steuerung der Bewertung hiervon zu erzeugen;
einen Teilnehmerprofilspeicher (203), der dazu ausgelegt ist, Teilnehmerdaten und Auslöserdaten, die den Dienstinitiierungs-Anforderungsnachrichten entsprechen, zu speichern;
einen dienenden Knoten (107) in einem Netz, der momentan mit der Verarbeitung des Netzereignisses beschäftigt ist; und
eine Ereignisverarbeitungsvorrichtung (201) nach einem der vorhergehenden Ansprüche.

17. Verfahren zum Verarbeiten von Dienstinitiierungs-Anforderungsnachrichten in einem Ereignisverarbeitungssystem, wobei das Ereignisverarbeitungssystem mehrere Dienstknoten (App 1, App 2), von denen ein Teilnehmer während der Verarbeitung eines Netzereignisses einen Dienst empfangen kann, einen Bewertungsknoten (205), der dazu ausgelegt ist, das Netzereignis zu bewerten, und einen dienenden Knoten (107) in einem Netz, der momentan mit der Verarbeitung des Netzereignisses beschäftigt ist, enthält, wobei das Verfahren die folgenden Schritte enthält:
in Reaktion auf den Empfang (501) einer Dienstinitiierungs-Anforderungsnachricht von dem dienenden Knoten (107), die einem angeforderten Netzereignis entspricht, Abfragen (502a, 502b) eines Teilnehmerprofilspeichers (203) anhand von Teilnehmerdaten und von Auslöserdaten, die von der Dienstinitiierungs-Anforderungsnachricht abgeleitet werden können, um einen oder mehrere Dienstknoten zu identifizieren, die an dem angeforderten Netzereignis beteiligt sind;
Senden (503) einer Dienstanforderungsnachricht an jeden identifizierten Dienstknoten;
Empfangen (505) entsprechender Dienstdaten von dem oder jedem der identifizierten Dienstknoten;
Übertragen (507) einer Dienstbewertungs-Anforderungsnachricht an den Bewertungsknoten, wobei die Dienstbewertungs-Anforderungsnachricht die von dem oder jedem identifizierten Dienstknoten empfangenen Dienstdaten enthält;
Bewerten des Netzereignisses anhand der Dienstbewertungs-Anforderungsnachricht; und
in Reaktion auf die Bewertungsantwort (509), die Daten enthält, die einen Verbindungsbefehl von den Bewertungsknoten angeben, Erzeugen einer Dienstantwortnachricht und Übertragen (511) derselben an den dienenden Knoten, von dem die Dienstinitiierungs-Anforderungsnachricht empfangen wurde, wobei die Dienstantwortnachricht, die an den dienenden Knoten übertragen wird, von dem von dem Bewertungsknoten empfangenen Verbindungsbefehl abhängt.

18. Verfahren nach Anspruch 17, das das Einbetten von Daten, die Dienstknoten und ein oder mehrere Attribute hiervon identifizieren, in die Dienstinitiierungs-Anforderungsnachricht enthält.

19. Verfahren nach Anspruch 17 oder Anspruch 18, wobei die Dienstinitiierungs-Anforderungsnachricht eine Anfangserfassungspunkt-Nachricht, IDP-Nachricht, eines intelligenten Netzes ist.

## Revendications

1. Appareil de traitement d'événements (201) destiné à être utilisé dans le traitement de messages de demande de lancement de service dans un système de traitement d'événements, l'appareil pouvant être connecté à une pluralité de noeuds de service (App 1, App 2) à partir desquels un abonné est apte à recevoir un service pendant le traitement d'un événement de réseau, et étant connecté à un noeud de tarification (205) lequel est agencé pour tarifer l'événement de réseau, l'appareil comprenant une fonction (313) qui, après réception (501) d'un message de demande de lancement de service correspondant à un événement de réseau demandé, alors que le message de demande de lancement de service a été envoyé par un noeud serveur (107) dans un réseau actuellement impliqué dans le traitement de l'événement de réseau demandé, agencée de façon à :
interroger (502a, 502b) une mémoire (203) de profils d'abonné sur la base de données d'abonné et de données de déclenchement aptes à être dérivées à partir du message de demande de lancement de service de sorte à identifier un ou plusieurs noeuds de service impliqués dans l'événement de réseau demandé ;
envoyer (503) un message de demande de service à chaque noeud de service ayant été identifié ; et recevoir (505) des données de service correspondantes à partir dudit noeud de service ou de chaque noeud de service ayant été identifié,
cas dans lequel, en réaction à la réception desdites données de service à partir dudit noeud de service ou de chaque noeud de service ayant été identifié, la fonction est agencée de façon à générer un message de demande de tarification de service (M1) et à transmettre (507) celui-ci au noeud de tarification, ledit message de demande de tarification de service comprenant lesdites données de service reçues à partir dudit noeud de service ou de chaque noeud de service ayant été identifié, et après réception (509) d'une réponse de tarification comprenant des données indiquant une instruction de connexion en provenance dudit noeud de tarification, à générer un message de réponse de service et à transmettre (511) celui-ci au noeud serveur à partir duquel le message de demande de lancement de service est reçu, alors que ledit message de réponse de service transmis au noeud serveur est subordonné à l'instruction de connexion reçue à partir du noeud de tarification.

2. Appareil de traitement d'événements selon la revendication 1, le message de demande de lancement de service incluant des données qui identifient le déclencheur de lancement de service correspondant, et la fonction étant agencée de façon à accéder à des données qui identifient les noeuds de service correspondant audit déclencheur de lancement de service, en vue d'une utilisation lors de la récupération desdites données de service correspondant auxdits noeuds de service.

3. Appareil de traitement d'événements selon la revendication 1 ou la revendication 2, la fonction étant agencée de façon à contrôler le fonctionnement d'une pluralité de noeuds de service en conformité avec les données de service récupérées de sorte à générer ledit message de demande de tarification de service.

4. Appareil de traitement d'événements selon l'une quelconque des revendications précédentes, le message de demande de tarification de service incluant des données qui identifient les noeuds de service ainsi qu'un ou plusieurs attributs de ceux-ci correspondant audit déclencheur de lancement de service.

5. Appareil de traitement d'événements selon la revendication 4, la fonction étant agencée de façon à identifier, à partir des données reçues pendant ledit contrôle desdits noeuds de service, lesdits attributs de ceux-ci.

6. Appareil de traitement d'événements selon la revendication 5, le message de demande de tarification de service comportant un premier message comprenant lesdites identités du noeud de service et les attributs de celui-ci, ainsi qu'un deuxième message comprenant la demande de lancement de service.

7. Appareil de traitement d'événements selon la revendication 6, le premier message étant envoyé indépendamment dudit deuxième message.

8. Appareil de traitement d'événements selon la revendication 7, le premier message étant envoyé en conformité avec un premier protocole de transport et le deuxième message étant envoyé en conformité avec un deuxième protocole de transport.

9. Appareil de traitement d'événements selon la revendication 8, ledit deuxième protocole de transport étant différent dudit premier protocole de transport.

10. Appareil de traitement d'événements selon la revendication 5, le message de demande de tarification de service comprenant une demande de lancement de service et l'appareil étant agencé de façon à intégrer lesdites données identifiant les noeuds de service, ainsi qu'un ou plusieurs attributs de ceux-ci, au sein dudit message de demande de lancement de service.

11. Appareil de traitement d'événements selon la revendication 10, le message de demande de lancement de service étant un message IDP (point de détection initial) de réseau intelligent.

12. Appareil de traitement d'événements selon l'une quelconque des revendications précédentes, ledit message de réponse de service comprenant une ou plusieurs demandes pour des données indiquant l'apparition d'un événement spécifique.

13. Appareil de traitement d'événements selon la revendication 12, la fonction étant agencée, après réception desdites données indiquant un événement spécifique, de façon à identifier un ou plusieurs noeuds de service qui sont associés à l'événement et à récupérer les deuxièmes données de service en rapport avec celui-ci, cas dans lequel la fonction est agencée de façon à générer un deuxième message de demande de tarification de service sur la base des deuxièmes données de service et à transmettre celui-ci au noeud de tarification, et après réception d'une deuxième réponse de tarification à partir dudit noeud de tarification, à générer un deuxième message de réponse de service et à transmettre celui-ci au noeud serveur à partir duquel les données d'événement ont été reçues.

14. Appareil de traitement d'événements selon la revendication 12 ou la revendication 13, chaque réponse de tarification incluant des données destinées à être utilisées dans le déclenchement d'un événement de facturation par rapport à une partie au moins de l'événement de réseau.

15. Appareil de traitement d'événements selon la revendication 14, le deuxième message de demande de tarification comprenant des données de contrôle associées à ladite réponse de tarification en vue d'une utilisation dans la terminaison de la facturation qui y est associée.

16. Système de traitement d'événements destiné à être utilisé dans le traitement de messages de demande de lancement de service, le système comprenant :
une pluralité de noeuds de service (App 1, App 2) à partir desquels un abonné est apte à recevoir un service pendant le traitement d'un événement de réseau ;
un noeud de tarification (205) lequel est agencé de façon à recevoir des données indiquant les services associés audit traitement de l'événement de réseau, de sorte à générer une réponse de tarification destinée à être utilisée dans le contrôle de la tarification de celui-ci ;
une mémoire (203) de profils d'abonné laquelle est agencée de façon à stocker des données d'abonné et des données de déclenchement correspondant à des messages de demande de lancement de service ;
un noeud serveur (107) dans un réseau actuellement impliqué dans le traitement de l'événement de réseau ; et
un appareil de traitement d'événements (201) selon l'une quelconque des revendications précédentes.

17. Procédé de traitement de messages de demande de lancement de service dans un système de traitement d'événements, le système de traitement d'événements comportant une pluralité de noeuds de service (App 1, App 2) à partir desquels un abonné est apte à recevoir un service pendant le traitement d'un événement de réseau, un noeud de tarification (205) lequel est agencé pour tarifer l'événement de réseau, et un noeud serveur (107) dans un réseau actuellement impliqué dans le traitement de l'événement de réseau, le procédé comprenant les étapes consistant à :
en réaction à la réception (501) d'un message de demande de lancement de service à partir dudit noeud serveur (107) et correspondant à un événement de réseau demandé, interroger (502a, 502b) une mémoire (203) de profils d'abonné sur la base de données d'abonné et de données de déclenchement aptes à être dérivées à partir du message de demande de lancement de service de sorte à identifier un ou plusieurs noeuds de service impliqués dans l'événement de réseau demandé ;
envoyer (503) un message de demande de service à chaque noeud de service ayant été identifié ;
recevoir (505) des données de service correspondantes à partir dudit noeud de service ou de chaque dudit noeud de service ayant été identifié ;
transmettre (507) un message de demande de tarification de service au noeud de tarification, le message de demande de tarification de service comprenant lesdites données de service reçues à partir dudit noeud de service ou de chaque noeud de service ayant été identifié ;
tarifer l'événement de réseau sur la base du message de demande de tarification de service ; et en réaction à une réponse (509) de tarification comprenant des données indiquant une instruction de connexion en provenance dudit noeud de tarification, générer et transmettre (511) un message de réponse de service en vue de sa transmission au noeud serveur à partir duquel le message de demande de lancement de service est reçu, dans lequel ledit message de réponse de service transmis au noeud serveur est subordonné à l'instruction de connexion reçue à partir du noeud de tarification.

18. Procédé selon la revendication 17, incluant l'intégration de données identifiant des noeuds de service, ainsi qu'un ou plusieurs attributs de ceux-ci, au sein dudit message de demande de lancement de service.

19. Procédé selon la revendication 17 ou la revendication 18, le message de demande de lancement de service étant un message IDP (point de détection initial) de réseau intelligent.
